Europäisches Patentamt

European Patent Office

Office européen des brevets

(19)

(11) Veröffentlichungsnummer : **0 070 448**
**B1**

(12) **EUROPÄISCHE PATENTSCHRIFT**

(45) Veröffentlichungstag der Patentschrift :
20.08.86

(21) Anmeldenummer : 82106008.4

(22) Anmeldetag : 06.07.82

(51) Int. Cl.⁴ : **G 01 N 27/56**

(54) **Elektrochemische Messzelle.**

(30) Priorität : 21.07.81 DE 3128738

(43) Veröffentlichungstag der Anmeldung :
26.01.83 Patentblatt 83/04

(45) Bekanntmachung des Hinweises auf die Patenterteilung : 20.08.86 Patentblatt 86/34

(84) Benannte Vertragsstaaten :
AT BE CH FR GB IT LI NL SE

(56) Entgegenhaltungen :
AU-B-   493 408
DE-A- 2 754 522
DE-A- 2 842 645
DE-B- 2 206 216
DE-B- 2 738 755
GB-A- 1 403 685

(73) Patentinbaher : BROWN, BOVERI & CIE Aktiengesellschaft
Kallstadter Strasse 1
D-6800 Mannheim 31 (DE)

(72) Erfinder : Rohr, Franz-Josef, Dr.
Waldstrasse 2
D-6941 Abtsteinach (DE)
Erfinder : Reich, Andreas
Otto-Hahn-Platz 4
D-6900 Heidelberg (DE)

(74) Vertreter : Kempe, Wolfgang, Dr. et al
c/o Brown, Boveri & Cie AG Postfach 351
D-6800 Mannheim 1 (DE)

## Beschreibung

Die Erfindung bezieht sich auf eine elektrochemische Meßzelle, gemäß dem Oberbegriff des Patentanspruches 1.

Eine aus der DE-PS 2 738 755 bekannte elektrochemische Meßzelle dieser Art weist infolge ihrer Elektroden, die keramisches Oxidmaterial enthalten, hohe thermische und chemische Stabilität sowie gute katalytische Wirksamkeit auf, die Elektronenleitfähigkeit und somit die elektrische Strombelastbarkeit der Elektroden läßt jedoch zu wünschen übrig.

Aus der AU-B-493 408 ist eine Meßzelle zur Bestimmung des Sauerstoffgehaltes beschrieben. Der Festelektrolyt ist mit einer inneren und einer äußeren Elektrode ausgestattet. Die Elektroden sind aus Platin oder einem anderen metallischen Material gefertigt, das in Form von Drähten ausgebildet ist.

In der GB-PS 14 03 685 ist eine Meßvorrichtung beschrieben, die einen Festelektrolyten aufweist, der mit einer inneren und einer äußeren Elektrode ausgestattet ist. Beide Elektroden sind aus Platin gefertigt. Die äußere Elektrode ist zum Schutz gegen die Einwirkungen von korrosiven Stoffen von einer Schutzschicht überzogen, die aus Lanthankobaldoxid besteht, das mit Strontiumoxid dotiert ist.

Aus der DE-OS 27 54 522 sind ein Sauerstoffmeßfühler und ein festes Mischelektrolytmaterial bekannt. Die für die Durchführung der Messung verwendeten Elektroden sind aus einem metallischen oder keramischen Material gefertigt.

Die Aufgabe wird erfindungsgemäß durch die Merkmale des Patentanspruchs 1 gelöst.

In der Schicht, welche die Elektrode bildet, ist also metallisches Material hoher Elektronenleitfähigkeit derart eingelagert und somit die Elektronenleitfähigkeit der Elektrode insgesamt derart erhöht, daß diese vorzugsweise mindestens um den Faktor 5, insbesondere mindestens um den Faktor 10, verbessert ist. Als metallisches Material kann jedes übliche Metall verwendet werden, das den im Betrieb der Meßzelle auftretenden thermischen und chemischen Belastungen gewachsen ist. Unter dem Begriff Metalle in vorliegender Erfindung sollen außer technisch reinen Metallen auch Metallegierungen und gegebenenfalls heterogene Mischungen von Metallen oder Metallegierungen verstanden sein.

Als metallisches Material wird man, insbesondere für katalytisch wirksame Elektroden, Edelmetalle oder deren Legierungen einsetzen, wie z. B. Gold, Silber oder die sogenannten Platinmetalle, die Platin, Ruthenium, Rhodium, Palladium, Osmium und Iridium umfassen. In vielen Fällen dürfte es jedoch genügen, temperaturbeständige Legierungen, die Nickel und Chrom enthalten, zu verwenden.

Eine besonders bevorzugte Weiterbildung der Erfindung kann darin bestehen, daß das metallische Material aus kleinen Teilchen besteht, die in der Schicht, vorzugsweise gleichmäßig verteilt, eingelagert sind. Die Form der Teilchen kann beliebig sein, ihre größte Abmessung soll vorzugsweise höchstens fünfzig Prozent der Schichtdicke ausmachen. Auch können diese Teilchen aus katalytisch wirksamen Material bestehen.

In vielen Fällen ist es am einfachsten, wenn die Teilchen massiv aus metallischem Material bestehen.

Eine andere Empfehlenswerte Weiterbildung, die gute Elektronenleitfähigkeit der Schicht mit geringem Materialeinsatz verbindet, ist dadurch gekennzeichnet, daß die Teilchen einen Kern aus vorzugsweise elektronenleitenem Keramikmaterial und einem Mantel aus metallischem Material aufweisen. Durch die zusätzliche Ausbildung des Kernes aus elektronenleitendem Keramikmaterial kann der Mantel im Verhältnis zur Größe der Teilchen sehr dünn ausgebildet und trotzdem ausreichende Elektronenleitfähigkeit der Teilchen erreicht werden.

Soll die Elektrode katalytische Wirksamkeit besitzen, so enthält mindestens der Mantel ein katalytisch aktives metallisches Material. Als solches Material kommt vorzugsweise ein Material oder eine Legierung aus der Platingruppe in Frage.

Zusätzlich empfiehlt es sich, auch den Kern aus katalytisch wirksamen Oxidmaterial herzustellen.

Eine weitere bevorzugte Ausgestaltung der Erfindung kann auch darin bestehen, daß ausschließlich Teilchen mit einem Mantel aus metallischem Material in der Schicht vorhanden sind. Die Elektrode besteht also nur aus solchen Teilchen, die z. B. durch Sinterung zur Elektrode verbunden sind. Neben einem einfachen Aufbau der Schicht besteht der Hauptvorteil darin, daß gute Elektronenleitfähigkeit mit geringem Aufwand erzielt werden kann.

Weitere Vorteile und Merkmale der Erfindung gehen aus der folgenden Beschreibung von Ausführungsbeispielen im Zusammenhang mit den schematischen Zeichnungen hervor.

Hierbei zeigen:

Figur 1  den Ausschnitt aus einer ringzylindrischen Meßzelle im Querschnitt,

Figur 2  ein Teilchen für den Aufbau einer Schicht als Einzelheit und im Schnitt in vergrößerter Darstellung und

Figur 3  den Aufbau einer Schicht aus Teilchen gemäß Fig. 2.

Gleiche Teile sind in den einzelnen Figuren mit den gleichen Bezugszeichen versehen.

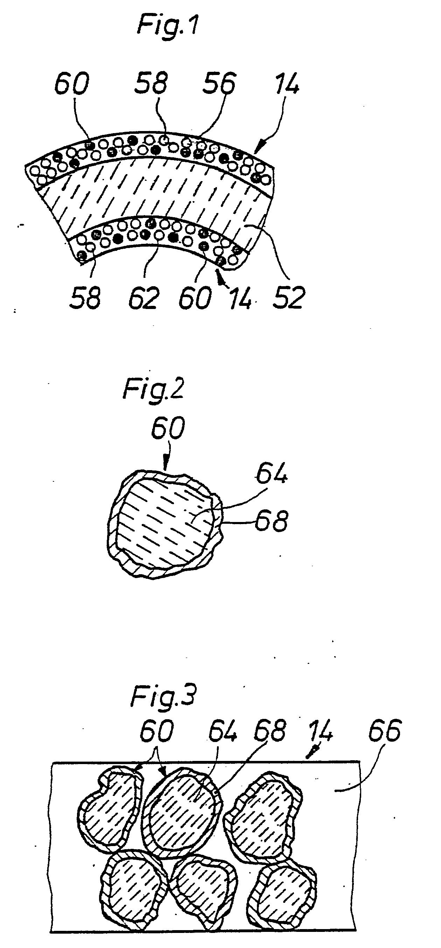

Fig. 1 zeigt einen Ausschnitt aus einer ringzylindrischen Meßzelle im Querschnitt und als Ausführungsvariante in stark vergrößerter Darstellung. Auf dem Festelektrolyten 52 ist eine äußere Schicht 56 und gegebenenfalls eine innere Schicht 62 vorhanden, welche die Elektroden 14 bilden. Die Schichten 56, 62 bestehen hier aus Oxidmaterial in Form von Körnern 58, von denen lediglich der Umriss dargestellt ist. Zwischen diese Körner 58 sind kleine metallische Teilchen 60 ebenfalls in Form von Körnern gleichmäßig verteilt eingebettet. Die Teilchen 60 sind hierbei als schwarze Punkte dargestellt.

Die Teilchen 60 können aus massivem metallischen Material bestehen oder zur Einsparung von metallischen Material jeweils einen Kern 64 aus keramischem Oxidmaterial aufweisen, der von einem metallischen Mantel 68 umgeben ist. Die Wandstärke eines Mantels 68 ist sehr gering im Verhältnis zur Größe eines Teilchens 60, wie dies auch aus Fig. 2 deutlich zu erkennen ist.

Fig. 3 zeigt schließlich einen Querschnitt durch eine Schicht 66 in stark vergrößerter Darstellung. In Abänderung gegenüber den Schichten gemäß der Fig. 1 sind hier nur Teilchen 60 vorgesehen, die jeweils einen Kern 64 aus keramischen Oxidmaterial und einen Mantel 68 aus metallischem Material aufweisen. Die Teilchen 60 entsprechen somit den Teilchen gemäß Fig. 2 und es gelten auch hier die zu dieser Figur gegebenen Erläuterungen. Der Aufbau einer Schicht gemäß Fig. 3 bringt bei geringem Aufwand an metallischem Material hohe Elektronenleitfähigkeit der Elektrode. Diese kann noch verbessert werden, indem der Kern 64 aus elektronenleitendem keramischem Material hergestellt wird. Auch kann der Schicht durch entsprechende Auswahl des Materials für die Mäntel 68, katalytische Wirksamkeit verliehen werden.

Für den Aufbau der erfindungsgemäßen Meßzellen können folgende Richtwerte bzw. Herstellungsrichtlinien benutzt werden. In den Ausführungsbeispielen gemäß den Figuren 1 und 3 ist die Dicke des Festelektrolyten ungefähr 0,5 bis 2 mm, die Dicke der Schichten, welche die Elektroden bilden, beträgt ungefähr 0,05 bis 0,3 mm.

Die Herstellung der Schichten für die Meßzellen gemäß den Ausführungsbeispielen 1 und 3 erfolgt durch Plasmaspritzen des keramischen Oxidpulveres auf die mit den Metalldrähten oder Metallnetzen umwickelte oder belegte Oberfläche des Festelektrolyten oder durch Aufbringen einer keramischen Oxidpulver-Suspension mit anschließender Trocknung und Sinterung.

Die Dicke der Schichten in den Ausführungsbeispielen gemäß den Figuren 1 und 3 beträgt jeweils etwa 0,05 bis 0,3 mm, die maximale Dicke bzw. der maximale Durchmesser der Teilchen beträgt etwa 0,01 bis 0,08 mm, das gleiche gilt für die Körner 58 aus keramischem Oxidmaterial. Zur Herstellung der Schicht wird keramis ches Oxidpulver zu einer Metallsuspension oder Metallpaste gemischt und auf die Festelektrolytoberfläche aufgetragen. Nach dem Trocknen wird die Schicht bei einer Temperatur von 900 bis 1 100 Grad Celsius eingebrannt. Es ist jedoch auch möglich, das pulverförmige Oxidmaterial und das feinkörnige metallische Material zu mischen, ein flüssiges organisches Suspensionsmittel, z. B. Amylacetat-Nitro-Zellulose, hinzuzufügen und entsprechend Vorstehendem aufzubringen.

Ein Teilchen gemäß Fig. 2 hat eine Größe bzw. einen Durchmesser von maximal 0,1 mm, der meist verwendete Größenbereich liegt bei 0,02 bis 0,08 mm. Die Dicke des metallischen Mantels 68 beträgt ungefähr 1/5 bis 1/25 der Teilchengröße. Für die Herstellung der Teilchen gemäß Fig. 2 werden entsprechend große Körner eines keramischen Oxidpulvers mit einer Metallsalzlösung oder einer Lösung einer metallorganischen Verbindung des Metalls getränkt und der metallische Mantel durch anschließende termische Zersetzung des Salzes bzw. der metallorganischen Verbindung erzeugt.

Das elektronenleitende keramische Material, das für die Herstellung der Schichten benutzt wird, kann z. B. aus einem Material mit der Zusammensetzung La Me $O_3$ bestehen, das mit Strontium, Kalzium, Barium oder Aluminium dotiert ist, wobei Me Kobalt, Nickel, Mangan oder Chrom bedeutet. Die Zusammensetzung weiterer Schichten dieser Art ist in der DE-PS 2 738 755 beschrieben. Für Sauerstoffmessungen enthält der Festelektrolyt sauerstoffionenleitendes Material, z. B. mit Kalziumoxid stabilisiertes Zirkoniumoxid.

Die Strombelastbarkeit der Elektroden einer erfindungsgemäßen Meßzelle ist ungefähr 3 bis 5 mal so hoch wie die entsprechenden Werte einer Meßzelle mit Elektroden, die lediglich keramisches Oxidmaterial enthalten.

Auch der elektrochemische Sauerstoffumsatz, bezogen auf einen Quadratzentimeter der Elektrode, ist bei Meßzellen gemäß der Erfindung um etwa den Faktor 3 bis 5 erhöht gegenüber Meßzellen mit herkömmlichen oxidischen Elektroden, selbst gegenüber Meßzellen mit Edelmetall-Elektroden, z. B. aus Platin, weist die erfindungsgemäße Meßzelle eine Verbesserung um etwa den Faktor 2 auf. Unter dem Begriff « elektrochemischer Sauerstoffumsatz » versteht man die Vorgänge an und in den Elektroden während des Betriebes, insbesondere den An- und Abtransport der Reaktanden, der durch die Porosität der Elektrode stark beeinflußt wird. Auch gehören der Ladungsaustausch und die katalytische Wirksamkeit zu vorgenanntem Begriff.

Elektroden die gemäß vorliegender Erfindung ausgebildet sind, werden bevorzugt bei solchen Meßzellen verwendet, von denen während des Betriebes ein elektrischer Strom abgeleitet oder denen ein solcher Strom zugeführt wird. Dieser elektrische Strom ist hierbei ein Maß für die zu erfassende Gaskomponente.

## Patentansprüche

1. Elektrochemische Meßzelle insbesondere für die Bestimmung des Sauerstoffgehaltes in Gasen, mit einem Festelektrolyten (12, 32, 52) der wenigstens eine Elektrode (14) aufweist, die in Form mindestens einer elektronenleitendes keramisches Material enthaltenden Schicht (16, 22 ; 36, 42 ; 56, 62 ; 66) ausgebildet ist, dadurch gekennzeichnet, daß in die Schicht (16, 22 ; 36, 42 ; 56, 62 ; 66) kleine Teilchen (60) aus massivem metallischen Material und/oder kleine Teilchen (60) mit einem Kern (64) aus elektronenleitendem Keramikmaterial und einem Mantel (68) aus metallischem Material, dessen Elektronenleitfähigkeit größer ist als die Elektronenleitfähigkeit des Oxidmaterials, mit einem Anteil eingebettet sind, der 2 bis 50 % des Volumens der Elektrode (14) ausfüllt, und die Elektronenleitfähigkeit der Elektrode (14) gemäß diesem Anteil mindestens um einen Faktor 5, insbesondere mindestens um den Faktor 10 erhöht ist.

2. Elektrochemische Meßzelle nach Anspruch 1, dadurch gekennzeichnet, daß der Mantel (68) ein katalytisch aktives Material enthält.

3. Elektrochemische Meßzellen nach Anspruch 1 oder 2, dadurch gekennzeichnet, daß der Anteil des metallischen Materials 2 bis 20, vorzugsweise höchstens 30 und insbesondere höchstens 50 %, des Volumens der Elektrode (14) ausfüllt.

4. Elektrochemische Meßzelle nach einem der Ansprüche 1 bis 3, dadurch gekennzeichnet, daß das metallische Material wenigstens ungefähr gleich verteilt in der Schicht (16, 22 ; 36, 42 ; 56, 62, 66) angeordnet ist.

## Claims

1. Electrochemical measurement cell, in particular for determining the oxygen content in gases, with a solid electrolyte (12, 32, 52) having at least one electrode (14) which is made in the form of at least one layer (16, 22 ; 36, 42 ; 56, 62 ; 66) containing electron-conducting ceramic material, characterized in that, in the layer (16, 22 ; 36, 42 ; 56, 62 ; 66), small particles (60) of solid metallic material and/or small particles (60) having a core (64) of electron-conducting ceramic material and a shell (68) of metallic material, the electron conductivity of which is greater than the electron conductivity of the oxide material, are embedded in a quantity which fills 2 to 50 % of the volume of the electrode (14), and the electron conductivity of the electrode (14) is increased in accordance with this quantity by a factor of at least 5, and in particular at least by a factor of 10.

2. Electrochemical measurement cell according to claim 1, characterized in that the shell (68) contains a catalytically active material.

3. Electrochemical measurement cell according to claim 1 or 2, characterized in that the quantity of the metallic material fills 2 to 20, preferably at most 30 and especially at most 50 % of the volume of the electrode (14).

4. Electrochemical measurement cell according to one of claims 1 to 3, characterized in that the metallic material is arranged in the layer (16, 22 ; 36, 42 ; 56, 62, 66) in an at least approximately uniform distribution.

## Revendications

1. Cellule de mesure électrochimique, en particulier pour la détermination de la teneur en oxygène dans les gaz, avec un électrolyte solide (12, 32, 52) qui présente au moins une électrode (14), qui est constituée d'au moins une couche (16, 22 ; 36, 42 ; 56, 62 ; 66) contenant une matière céramique conductrice d'électrons, caractérisée par le fait que dans la couche (16, 22 ; 36, 42 ; 56, 62 ; 66) sont noyées de petites particules (60) de matière métallique massive et/ou des petites particules (60) ayant un noyau (64) de matière céramique conductrice d'électrons et une enveloppe (68) de matière métallique, dont la conductibilité électronique est plus élevée que la conductibilité électronique de la matière à base d'oxyde, en une proportion qui remplit 2 à 50 % du volume de l'électrode (14), et par le fait que la conductibilité électronique de l'électrode (14), suivant cette proportion, est augmentée au moins d'un facteur 5, en particulier au moins d'un facteur 10.

2. Cellule de mesure électrochimique selon la revendication 1, caractérisée par le fait que l'enveloppe (68) contient une matière catalytiquement active.

3. Cellule de mesure électrochimique selon la revendication 1 ou 2, caractérisée par le fait que la proportion de la matière métallique remplit 2 à 20, de préférence au maximum 30 et en particulier au maximum 50 %, du volume de l'électrode (14).

4. Cellule de mesure électrochimique selon une des revendications 1 à 3, caractérisée par le fait que la matière métallique est disposée dans la couche (16, 22 ; 36, 42 ; 56, 62 ; 66) au moins de manière à peu près régulièrement répartie.

## Fig.1

60  58  56  14

58  62  60  14  52

## Fig.2

60

64

68

## Fig.3

60  64  68  14  66